# EUROPEAN PATENT APPLICATION

(11) **EP 4 675 421 A1**
(43) Date of publication of application: **07.01.2026**
(21) Application number: 24186645.8
(22) Date of filing: 04.07.2024
(51) Int. Cl.: G06F 8/65, G06F 9/455

(54) **SYSTEM AND METHOD FOR UPDATING A COMPUTER PROGRAM**

(71) Applicant: Lemon Inc., Grand Cayman, KY1-1205 (KY); Beijing Zitiao Network Technology Co., Ltd., Beijing 100190 (CN)
(72) Inventor: ARIF, Usama, London, EC2Y 5EB (GB); ZHENG, Feiran, London, EC2Y 5EB (GB); WANG, Jian, Beijing, 100028 (CN)
(74) Representative: Marks & Clerk LLP

(57) **Abstract**

A method of loading an updated version of a computer program onto a computer-implemented machine that is running an initial version of the computer program, the computer-implemented machine comprising a physical memory and one or more processing modules, the method comprising: launching a virtual machine on the computer-implemented machine; loading the updated version of the computer program onto the virtual machine, the loading comprising, for each of a plurality of instructions: receiving an instruction to update a component of the physical machine; reading one or more initial parameters relating to the component; updating the one or more initial parameters using data contained within the instruction to generate one or more updated parameters; writing one or more updated parameters relating to the component of the virtual machine using the read data and the data in the instruction; and storing one or more updated parameters on the virtual machine; wherein the method further comprises, in response to the activation of a trigger condition, writing the one or more updated parameters from the virtual machine to the physical memory of the computer-implemented machine.

## Description

The invention described herein concerns the updating of computer programs on computer-implemented machines.

### BACKGROUND

It is beneficial for computers to maintain up-to-date versions of the computer programs that they run. Maintaining up-to-date computer programs offers an enhanced level of security and stability for the computer, improved performance, and the opportunity to explore new features such as filesystems, networking protocols and virtualisation techniques.

One type of computer program that must be maintained on a computer is a kernel. A kernel is a core component of an operating system and serves as the main interface between the computer's physical hardware and the processes running on it. One of the primary challenges in updating a kernel on a computer is the long downtime introduced in the operation of the computer (and specifically, for applications running on the computer) whilst the update is in process.

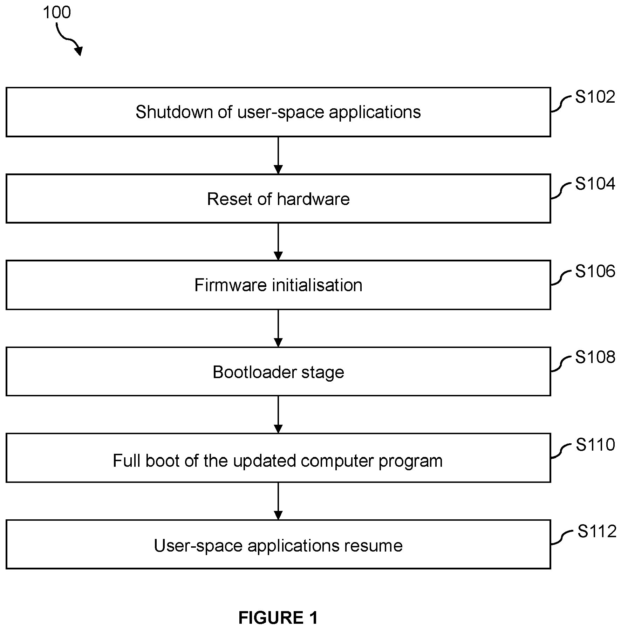

The traditional method of updating, or booting, a new version of a computer program such as a kernel onto a computer-implemented machine involves a full system reboot. An illustration of a full system reboot is illustrated in figure 1. The reboot is initiated by first step S102 at which the hardware of, all of the applications running on, the computer are shut down. This includes all user-space applications, which are applications that are operated by the user of the computer. Next, at step S104 the hardware of the machine is reset in order to prepare it for the booting of the computer program. Then, at step S106, firmware that is loaded onto the computer is initialised. The firmware conducts a power-on-self-test (POST) for the computer. A POST is a series of diagnostic tests that check the hardware of the system to ensure that it is in a suitable state to boot the computer program. An example of a POST test is the verification of the registers of the processing units. At step S108, once POST has been successfully completed, the firmware a bootloader on the computer. The purpose of the bootloader is to load an operating system on the computer that includes the updated computer program. Finally, at step S110, the updated computer program is booted. This step involves the initialisation of computer hardware and memory, which includes powering on some of the processing units of the machine, setting up memory management, configuring device drivers and starting a scheduler. Once step S110 is complete, then the applications running on the machine can resume their operation at step S112.

In the method illustrated in figure 1, user-space applications running on the machine are inactive between steps S102 and S112. The long downtime experienced by applications during the update process in a reduction in customer experience and reputation, and also a decrease in user productivity whilst specific data or applications are inaccessible to the user.

Some embodiments of the invention described below solve some of the above problems. However the invention is not limited to solutions to these problems.

### SUMMARY

This summary is provided to introduce a selection of concepts in a simplified form that are further described below in the detailed description. This summary is not intended to identify key features or essential features of the claimed subject matter, nor is it intended to be used to determine the scope of the claimed subject matter.

According to a first aspect there is provided a method of loading an updated version of a computer program onto a computer-implemented machine that is running an initial version of the computer program, the computer-implemented machine comprising a physical memory and one or more processing modules, the method comprising: launching a virtual machine on the computer-implemented machine; loading the updated version of the computer program onto the virtual machine, the loading comprising, for each of a plurality of instructions: receiving an instruction to update a component of the physical machine; reading one or more initial parameters relating to the component; updating the one or more initial parameters using data contained within the instruction to generate one or more updated parameters; writing one or more updated parameters relating to the component of the virtual machine using the read data and the data in the instruction; wherein the method further comprises, in response to the activation of a trigger condition, writing the one or more updated parameters from the virtual machine to the physical memory of the computer-implemented machine.

According to a second aspect there is provided computer-implemented machine configured to load an updated version of a computer program onto the machine whilst the machine is running an initial version of the computer program, the computer-implemented machine comprising: a physical memory; and one or more processing modules configured to: launch a virtual machine on the computer-implemented machine; load the updated version of the computer program onto the virtual machine, the loading comprising, for each of a plurality of instructions: receiving an instruction to update a component of the physical machine; reading one or more initial parameters relating to the component; updating the one or more initial parameters using data contained within the instruction to generate one or more updated parameters; writing one or more updated parameters relating to the component of the virtual machine using the read data and the data in the instruction; and storing one or more updated parameters on the virtual machine; and in response to the activation of a trigger condition, writing the one or more updated parameters from the virtual machine to the physical memory of the computer-implemented machine.

Features of different aspects and embodiments of the invention may be combined as appropriate, as would be apparent to a skilled person, and may be combined with any of the aspects of the invention.

### BRIEF DESCRIPTION OF THE DRAWINGS

Embodiments of the invention will be described, by way of example only and with reference to the following drawings, in which:
Figure 1 is a flow chart illustrating a method of loading an updated version of a computer program onto a computer-implemented machine that is known in the state of the art;
Figure 2 is an improved method of loading an updated version of a computer program onto a computer-implemented machine according to the invention;
Figure 3 is an illustration of the process for loading an updated version of the computer program according to the invention;
Figure 4 is an illustration of a computer-implemented machine configured to perform the method of figures 2 and 3;
Figure 5 is a timing diagram illustrating the time taken to load an updated version of a computer program according to the state of the art;
Figure 6 is a timing diagram illustrating the time taken to load an updated version of a computer program according to the invention.

Common reference numerals are used throughout the figures to indicate similar features.

### DETAILED DESCRIPTION

Embodiments of the present invention are described below by way of example only. These examples represent the best ways of putting the invention into practice that are currently known to the applicant although they are not the only ways in which this could be achieved.

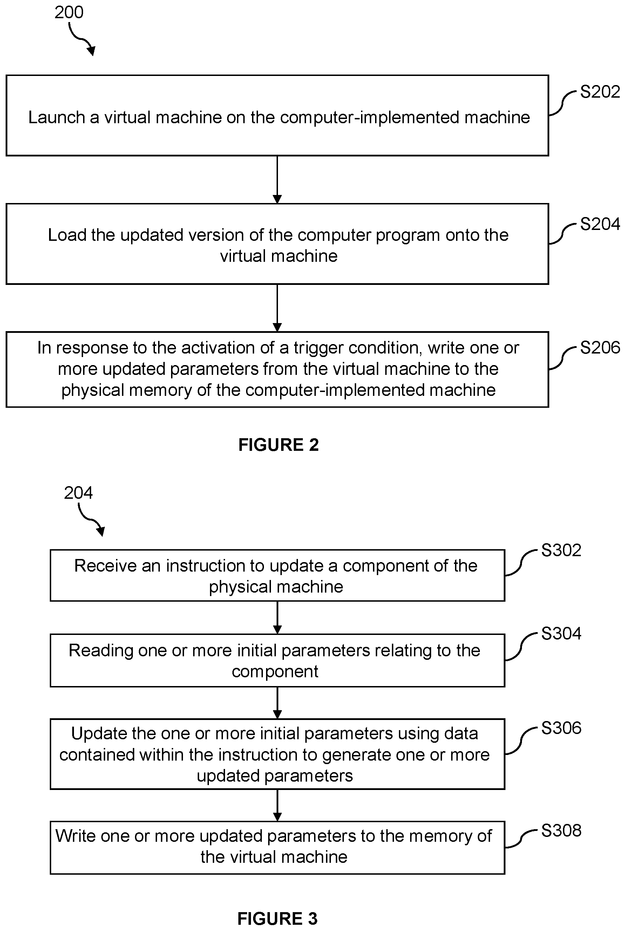

An improved method for loading an updated version of a computer program is illustrated in figures 2 and 3. The method of figures 2 and 3 involves launching a virtual machine on the physical computer-implemented machine onto which the computer program is to be loaded. A virtual machine is a computing resource that uses software instead of hardware to run programs and deploy software applications. The virtual machine virtualises, or emulates, the hardware components of a physical computer, such as the processing units, memory and server. A virtual machine may otherwise be referred to as a "guest" machine, and the physical machine that it runs may be referred to as the "host" machine. Each component of the virtual machine may be mapped onto a corresponding physical component of the host machine. The virtual machine may be run entirely separately to the host machine. That is, a first set of applications and/or instructions can be run on the virtual machine whilst a second set of applications and/or instructions are run on the host machine. That is, the operation of a virtual machine can be separated from that of its host machine.

The invention described herein uses the advantageous separable nature of a virtual machine from its host machine. More specifically, the invention uses a virtual machine to load, or boot, an updated version of a computer program onto that machine whilst the host machine is running an initial version of the computer program. In other words the host machine can be used to operate as normal, using user-space applications, for at least a portion of the upload of the updated version of the computer program is loaded onto the virtual machine. The initial version of the computer program may otherwise be referred to as a first, or current, version of the computer program. The updated version of the computer program may otherwise be referred to as a second, or new, version of the computer program.

The method of the invention described herein is initiated at step S202 of figure 2. At step S202 of figure 2 the physical computer-implemented, or host, machine is already running an initial version of the computer program. That is, the physical machine is operating its user-space applications using the initial version of the computer program. Whilst the host machine is running the initial version of the computer program, at step S202 a virtual machine is launched on the computer-implemented machine. The virtual machine is launched by the computer-implemented machine. The virtual machine may be configured using virtualisation software. The virtual machine may be configured for the first time in advance of step S202, or may be configured for the first time at step S202.

The virtual machine may be launched using data representing the updated version of the computer program and the boot parameters of the physical machine. That is, the virtual machine may be launched using one or more data packets relating to the updated version of the computer program. The virtual machine may also be launched using one or more parameters relating to the processing modules of the computer-implemented machine. In other words, in addition to using the updated version of the computer program, the virtual machine may be launched using a hardware configuration of the physical machine. The virtual machine may also be launched using a storage location for the updated program. In other words, a storage location for storing data relating to the virtual machine may be allocated on the physical machine, and the identification of that location may be used to launch the virtual machine. The storage location may comprise one or more logical storage blocks. The storage location may be a virtual storage location on the physical machine. The storage location may be a ram disk of the physical machine. A ram disk is a virtual storage location that is created by partitioning a part of the memory of a machine using software. A ram disk is beneficial for storing data relating to the virtual machine as it offers significantly faster read and write speeds (and therefore increased efficiency) over other storage means.

The structure of the virtual machine may be identical to the structure of the physical machine. That is, the virtual machine may exactly emulate the structure of the physical machine. In other words, the virtual machine may emulate all the of parameters of all of the processing units and core components of the physical machine. For example, the virtual machine may exactly emulate the identifiers of central processing units (CPUIDs) and the model-specific registers (MSRs) of the physical machine. By emulating all of the core components of the physical device, the virtual machine is able to operate in the same way as the physical machine. Thus, the virtual machine can be used to replicate the actions and responses of the physical machine to external stimuli.

Once the virtual machine has been launched, the method proceeds to step S204 where the updated version of the computer program is loaded onto the virtual machine. In other words, the updated version of the computer program is booted, or started, on the virtual machine. The updated version of the computer program is loaded onto the virtual machine whilst the physical machine is running the initial version of the computer program. Loading the computer program onto the virtual machine is an iterative process that is performed for each instructions of a sequence of instructions that identify the updated version of the computer program. Each instruction comprises a request to update a component of the physical machine. The sequence of instructions is comprised of a plurality of read requests and a plurality of write requests. Each read request of the plurality of read requests is a request to access data regarding a component of the physical machine. Each write request is a request to write updated data to the physical machine.

The loading of the updated version of the computer program continues until, at step S206, a trigger condition is activated. In response to the activation of the trigger condition, the one or more updated parameters are written from the virtual machine to the physical memory of the computer-implemented machine. That is, at step S206, the status, or configuration, of the components of the virtual machine are written to the physical machine. Thus, by the end of step S206, the status of the physical machine matches the status of the virtual machine at the point at which the trigger condition was activated. Step S206 may otherwise be referred to as transmitting, to the physical machine, a snapshot of the status of the virtual machine. The snapshot of the virtual machine includes stored indications of all of the components of the virtual machine. For example, the snapshot may include the states of components such as CPU registers and dirty memory of the virtual machine. The snapshot may include the entire state of the virtual machine, both in memory and in hardware, that has been changed by the updated version of the computer program.

The iterative sub-steps of loading step S204 of figure 2 is illustrated in further detail in figure 3. The method is initiated at step S302 at which an instruction to update a component of the physical machine is received. The instruction may be received as a data packet. The instruction may be received by the virtual machine. More specifically, the instruction may be read from one or more data packets relating to the updated version of the computer program. The instruction may identify a component of the physical machine that is to be updated by the updated version of the computer program.

At step S304, after the instruction has been received, the method of figure 3 may further comprise reading one or more initial parameters relating to the component. That is, the virtual machine is configured to read one or more initial parameters relating to the component that is to be updated. The component may be a hardware component, a processing unit or the memory of the physical machine. For example, the hardware component may be a central processing unit (CPU) or an alternative hardware component such as the memory or timer of the physical machine.

Each time an instruction wishes to read one or more initial parameters relating to a component of the physical machine, it exits the virtual machine to obtain those parameters. The exiting of the virtual machine in order to read data from the physical machine may be referred to as a virtual machine exit. The virtual machine exits may be executed by a hypervisor that runs on the physical machine. That is, the one or more initial parameters relating to the component may read from a hypervisor. The hypervisor may otherwise be referred to as a virtual machine manager. A hypervisor is a piece of software that allows different operating systems to be run on different machines at the same time. The hypervisor is responsible for allocating underlying physical components of the physical machine to the virtual machine as required. Virtual machine exits may be performed by the hypervisor whilst user-space applications are running on the physical machine. Thus, the hypervisor may be able to read data relating to components that are not currently being used to run applications on the physical machine. The hypervisor may not be able to read data relating to components that are running user-space applications. For example, if a physical machine has three CPUs and is running a user-space application on a first of the three CPUs, then the hypervisor may be able to read data relating to the latter two CPUs but not the first CPU.

Once the initial parameters relating to the component have been read, then at step S306 the initial parameters are updated using data contained within the instruction to generate one or more updated parameters. That is, the parameters that are read from the physical machine are updated on the virtual machine using the updated version of the computer program. In other words, one or more updated parameters are updated using the read data and the data in the instruction Then, at step S308, the one or more updated parameters are written to the virtual machine. The one or more updated parameters may be written to the memory of the virtual machine. The memory of the virtual machine, in turn, is within a designated portion of memory within the physical machine (e.g., the ram disk).

The method may further comprise storing all of the updated parameters that are written to the virtual machine in a virtual memory of the virtual machine. That is, for each instruction of the updated version of the computer program that is executed, the updated parameters may be stored on the memory of the virtual machine. This means that the virtual machine keeps a cumulative record of the updates that have been performed on the virtual machine as a result of the loading of the updated version of the computer program. As the virtual machine is configured to exactly emulate the configuration of the physical machine, the virtual machine is configured to store the updated status of the components on the physical machine in response to the loading of instructions from the updated version of the computer program. This is important as it ensures that all of the changes to the state of the virtual machine can be applied to the physical machine.

The launching of the virtual machine in step S202 of figure 2 may be triggered by the receipt of one or more data packets containing data relating to the updated version of the computer program. Thus, the method of figure 2 may be preceded by the step of receiving one or more data packets containing data relating to the updated version of the computer program. That is, the method of figure 2 may be triggered by receipt of the updated version of the computer program by the physical machine. The updated version of the computer program may be received by the physical machine from the cloud, or from an external device or server.

The hypervisor used to perform the method of figures 2 and 3 may be a type 1 hypervisor. The type 1 hypervisor may otherwise be referred to as a "bare metal" hypervisor. A type 1 hypervisor is a layer of software that runs directly on the host machine's physical hardware. The type 1 hypervisor does not have to load an underlying operating system in order to operate. Thus, the use of a type 1 hypervisor is advantageous because, as a result of its direct access to the underlying hardware of the physical machine, it does not require auxiliary software in order to operate. Type 1 hypervisors are also advantageous due to their reliability and scalability. In a specific example, the hypervisor may form part of a kernel-based virtual machine (KVM).

The trigger condition that is activated at step S206 may be the inability of the virtual machine to execute an instruction of the updated version of the computer program. The virtual machine may be unable to execute an instruction because it may be unable to emulate a component that the program wishes to update. In other words, the trigger condition may be activated when an instruction of the updated version of the computer program attempts to access information from (i.e., issue a read request on) a component the physical machine that cannot be emulated by the virtual machine. This means that the information relating to the component cannot be emulated by the hypervisor. In some examples, the hypervisor may be unable to emulate specific information relating to the component. In other examples the hypervisor may be unable to emulate the component as a whole. In response to identifying that the instruction cannot be executed by the virtual machine, the virtual machine may be triggered to write its stored data to the physical machine. The virtual machine may then be shut down.

There are a number of reasons why the hypervisor may not be able to emulate a component of the physical machine. In one example, the component of the physical machine may be being used by the physical machine. In one example, where the component is a CPU, the CPU could be in use by the physical machine (e.g., to run user-space applications). In another example, the emulation of a specific component may not be supported by existing emulators (e.g., due to technical challenges or copyright restrictions). For example, it is not feasible to emulate proprietary GPU hardware. Examples of components of the physical machine that may not be able to be emulated by the hypervisor include a general processing unit (GPU), a network driver or a peripheral component interconnect (PCI).

The method of figure 3 may further comprise storing, for each of the instruction of the updated version of the computer program that is executed, a pointer on the virtual machine indicating the instruction that is being executed. That is, the method of figure 3 may further comprise storing an indication of a memory address at which the instruction that is being executed is stored. This ensures that, whilst the instruction is being executed, there is a mechanism for identifying the instruction. The sequence of instructions may be stored in the memory of the virtual machine in the order in which they are to be execute. Thus, storing a pointer to a specific instruction that is being executed also indicates the number of instructions that are left to be executed in the loading of the updated version of the computer program.

The method may further comprise updating the pointer after the one or more updated parameters relating to the component of the virtual machine have been written to the virtual machine. In other words, when a first instruction has been executed, the pointer may be updated to identify a second, subsequent, instruction that is the next instruction to be executed in the sequence of instructions. More specifically, method may further comprise updating the indication of the memory address to match the address at which the subsequent instruction is located. This ensures that the pointer is always up to date with the instruction that is being executed. The pointer may be included within the CPU execution station of the virtual machine.

The method of figure 2 may further comprise, in response to the trigger condition being activated, pausing loading of the updated version of the computer program onto the virtual machine. In other words, when the trigger condition is activated, the virtual machine may pause the booting of the updated version of the computer program. At the same time, in response to the trigger condition being activated, the physical machine may pause its operations. That is, the method may comprise pausing running the initial version of the computer program on the physical machine. In other words, the user-space applications may stop running on the physical machine. The physical machine may be shut down. The initial version of the computer program may be paused in response to a command being sent by the hypervisor to the physical machine.

The method of figure 2 may further comprise, in response to the trigger condition being activated, transmitting the pointer from the virtual machine to the physical machine. More specifically, the pointer may be transmitted to the memory of the physical machine. The pointer that is transmitted is the most current version of the pointer. Thus, the pointer indicates the next instruction that is to be executed by the updated version of the computer program. In other words, the pointer indicates the instruction that could not be executed by the virtual machine. The pointer therefore indicates the instruction in the sequence of instructions at which loading, or booting, of the updated version of the computer program should be resumed. Where the pointer is included within the CPU execution station of the virtual machine, transmitting the pointer to the physical machine may comprise transmitting an indication of the CPU execution station to the physical machine.

The pointer may be transmitted from the virtual machine to the physical machine at the same time as the status of the virtual machine is written to the physical machine. That is the physical machine may receive, at the same time, the status of the virtual machine at the point at which it stopped loading the updated version of the computer program and the pointer to the next instruction to be executed in the sequence of loading the program. In this example, the physical machine has all of the information that it needs to resume loading the computer program from the point at which the virtual machine stopped.

After the pointer and the status of the virtual machine are transmitted to the memory of the physical machine, the physical machine may continue to load the updated version of the computer program starting from the instruction indicated by the pointer. That is, the physical machine may continue to load the updated version of the computer program from the first instruction that failed to load on the virtual machine. The computer may then continue to sequentially load all of the remaining instructions for the updated version of the computer program. In other words, the physical machine may execute the rest of the booting process in place of the virtual machine.

The virtual machine may be configured to identify whether or not it is capable of booting, or loading, the updated version of the computer program. That is, there may be one or more instructions of the updated version of the computer program that fail to boot on the virtual machine. A failure of an instruction to boot on the virtual machine is separate from the need for the instruction to be run on the physical machine. A failure of an instruction to boot on the virtual machine may otherwise be referred to as an error. An error may occur whilst the emulator is processing an instruction of the booted system, which in turn may occur whilst the booted system is running in the virtual machine. An error may be reported with a reason code or error message. The error may be reported by the virtual machine. The reason code or error message may be used by the emulator to determine the source of the message. For example, the message may have been reported because the virtual machine was unable to emulate an instruction. Alternatively, the error may have been reported due to an unexpected behaviour of the guest machine. In dependence on the error message received, the emulator may determine and handle the error accordingly. An instruction may fail to boot because it may contain malware, or it may be corrupted. The method of figures 2 and 3 may further comprise, if the updated version of the computer program fails to load onto the virtual machine (e.g., because one or more instructions are faulty), discarding the updated version of the computer program without running it on the physical machine. This means that the physical machine is protected from the faulty program by the virtual machine, thereby increasing the security of the machine.

The computer program may be a program of the computer's operating system. In a specific example, the computer program that is loaded onto the computer-implemented machine in figures 2 and 3 may be a kernel. A kernel is a core component of an operating system and serves as the main interface between the computer's physical hardware and the processes running on it. In other words, a kernel forms the interface between the hardware of the computer and the applications running on the computer. The kernel forms part of the operating system of the computer.

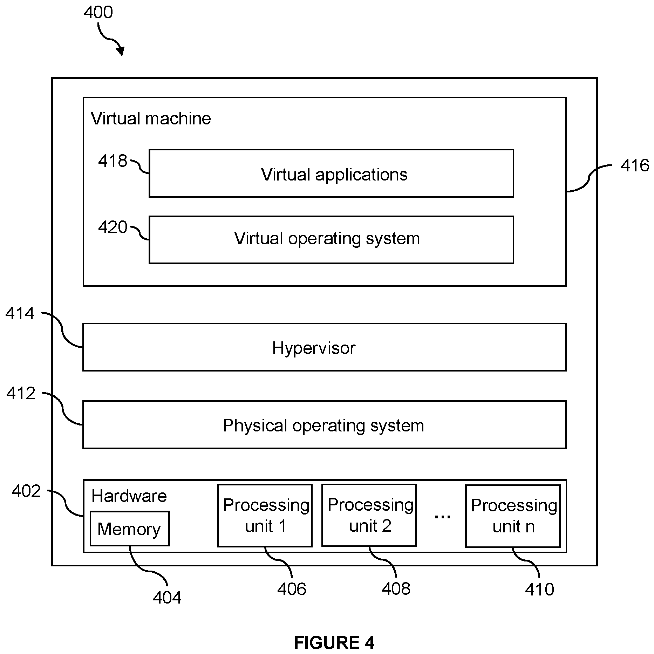

Figure 4 illustrates a computer-implemented machine 400 configured to perform the methods of figures 2 and 3. That is, the computer-implemented machine 400 is configured to load an updated version of a computer program onto the machine whilst the machine is running an initial version of the computer program. The computer-implemented machine comprises physical components 402 and software components 412, 414 and 416.

More specifically, the physical components 402 of the computer-implemented machine 400 may be defined as hardware components. The hardware components of the computer-implemented machine comprise a physical memory 404 and one or more processing modules 406, 408, 410. Figure 4 illustrates the machine 400 as comprising three processing modules, however it should be appreciated that the machine may comprise any number of processing units that is greater than or equal to one. The one or more processing units may comprise one or more GPUs and one or more CPUs. The machine may comprise additional hardware components other than memory 404 and one or more processing units. The machine 400 further comprises a physical operating system 412. The physical operating system is the low-level software that supports the basic functions of the machine, such as the scheduling of tasks and controlling of peripherals.

The computer-implemented machine 400 further comprises software for running a virtual machine. The software comprises a hypervisor 414 and a virtual machine 416. The virtual machine may, in turn, comprise a virtual operating system 420 and one or more virtual applications 418. The virtual operating system 420 may emulate the physical operating system 412 of the machine. The emulation of the physical operating system 412 by the virtual operating system 420 may be enabled by the hypervisor 414. The hypervisor is described in further detail with respect to figures 2 and 3 above.

The physical machine 400 of figure 4 is configured to perform the steps of the methods illustrated in figures 2 and 3. That is, the physical machine 400 is configured to launch a virtual machine, load an updated version of the computer program onto the virtual machine and, in response to the activation of a trigger condition, write the one or more updated parameters from the virtual machine to the physical memory of the computer-implemented machine. The machine is further configured to, in loading the updated version of the computer program onto the virtual machine, for each of a plurality of instructions: receive an instruction to update a component of the physical machine; read one or more initial parameters relating to the component, update the one or more initial parameters using data contained within the instruction to generate one or more updated parameters, write one or more updated parameters relating to the component to the virtual machine using the read data and the data in the instruction, and store one or more updated parameters on the virtual machine.

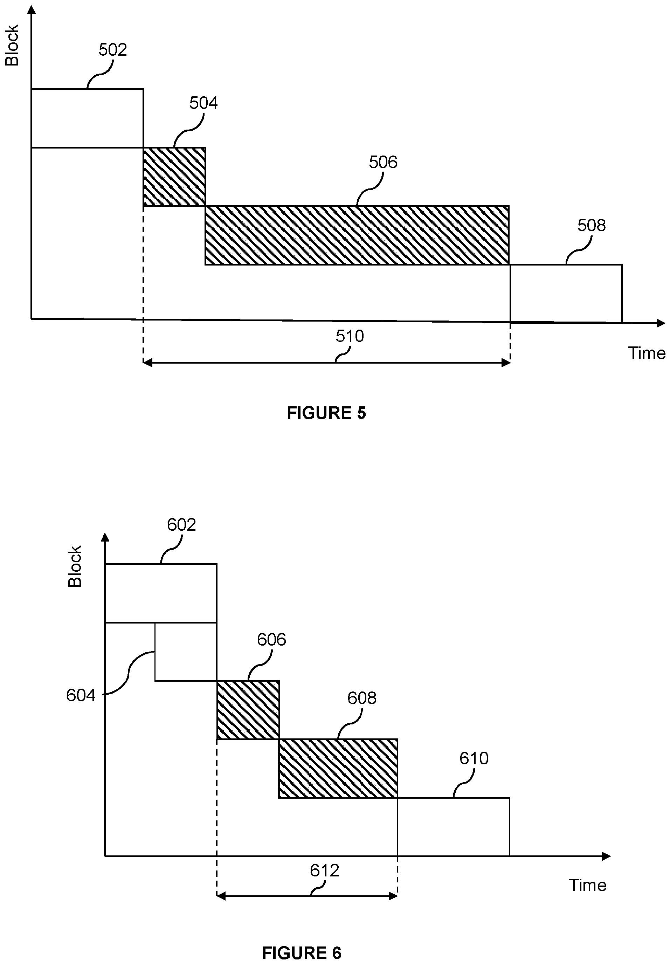

Figures 5 and 6 illustrate the reduction in time taken to execute the booting of an updated version of a computer program by implementing the method described herein. More specifically, figure 5 illustrates a timing diagram for a method of booting the computer according to the state of the art, and figure 6 illustrates a corresponding diagram for the method according to the claimed invention. Action blocks of figures 5 and 6 representing downtime of the physical machine (i.e., a period during which user-space applications are not running on the machine) are represented by cross-hatching.

The timing diagram of figure 5 illustrates the following action blocks:
- At block 502 the initial version of the computer program runs on the host machine;
- At block 504 the initial version of the computer program stops running on the host machine (i.e., user-space applications on the host machine are shutdown), the updated version of the computer program is received and the program loaded onto the host machine (steps S102-S108 of figure 1);
- At block 506, whilst the user-space applications are shut down, the machine is booted using the updated version of the computer program (step S110 of figure 1); and
- At block 508 the machine operates, or runs, using the updated version of the computer program (step S112 of figure 1).

It can be seen from figure 5 that the amount of downtime 510, during which applications loaded on the host machine cannot be run and productivity of the user is compromised, is significant.

By comparison, the timing diagram of figure 6 illustrates the following action blocks:
- At block 602, the initial version of the computer program runs on the host machine. Block 602 is initiated before subsequent block 604, and also runs simultaneously with this block;
- At block 604, whilst the initial version of the computer program is running on the host machine, the virtual machine is launched and the updated version of the computer program begins loading on the virtual machine (steps S202 and S204 of figure 2);
- At block 606 the hypervisor of the machine encounters an instruction for loading the updated version of the computer program that it is unable to process. At this point the stored status of the virtual machine is written from the virtual machine to the physical machine (step S206 of figure 2). Optionally the status of the virtual machine is written together with a pointer to the instruction that couldn't be processed by the virtual machine;
- At block 608, after virtual machine status and pointer have been written to the physical machine, the physical machine continues loading the updated version of the computer program starting at the instruction indicated by the pointer; and
- At block 610 the loading of the updated version of the computer program is complete and the physical machine is operated using the updated version of the computer program.

It can be seen that, in comparison to downtime 510 of the timing diagram illustrated in figure 5, the amount of downtime 612 experienced by the physical machine in the method illustrated in figure 6 is greatly reduced. This is due to the ability of the machine, at action block 604, to begin loading the updated version of the computer program onto the virtual machine whilst simultaneously running of applications on the host machine at step 602. This means that applications on the host machine only have to be shut down when the virtual machine is unable to continue loading the program.

Thus, the invention described herein is directed to solving the primary problem of how to reduce host downtime (i.e., application downtime) on a computer-implemented machine during the booting of an updated version of a computer program. Because the virtual machine that is implemented as part of the invention emulates the components of the physical machine on which it runs, the invention is universally applicable to all computer-implemented machines looking to reduce application downtime. The exact efficiencies gained by use of the invention described herein vary depending on the machine into which it is implemented.

Some operations or steps of the methods described herein may be performed by software in machine readable form e.g. in the form of a computer program comprising computer program code. Thus some aspects of the invention provide a computer readable medium which when implemented in a computing system cause the system to perform some or all of the steps or operations of any of the methods described herein. The computer readable medium may be in transitory or tangible (or non-transitory) form such as storage media include disks, thumb drives, memory cards etc. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The embodiments described above are largely automated. In some examples a user or operator of the system may manually instruct some steps of the method to be carried out.

In the described embodiments of the invention the system may be implemented as any form of a computing and/or electronic system as noted elsewhere herein. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system, or any other suitable platform software may be provided at the computing-based device to enable application software to be executed on the device.

The terms "computer" and "computer-implemented machine" are used herein to refer to any device with processing capability such that it can execute instructions. Those skilled in the art will realise that such processing capabilities may be incorporated into many different devices and therefore the terms "computer" and "computer-implemented machine" include PCs, servers, smart mobile telephones, personal digital assistants and many other devices.

It will be understood that the benefits and advantages described above may relate to one embodiment or may relate to several examples. The examples disclosed herein are not limited to those that solve any or all of the stated problems or those that have any or all of the stated benefits and advantages.

The term "comprising" is used herein to mean including the method steps or elements identified, but that such steps or elements do not comprise an exclusive list and a method or apparatus may contain additional steps or elements.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A method of loading an updated version of a computer program onto a computer-implemented machine that is running an initial version of the computer program, the computer-implemented machine comprising a physical memory and one or more processing modules, the method comprising:
launching a virtual machine on the computer-implemented machine;
loading the updated version of the computer program onto the virtual machine, the loading comprising, for each of a plurality of instructions:
receiving an instruction to update a component of the physical machine;
reading one or more initial parameters relating to the component;
updating the one or more initial parameters using data contained within the instruction to generate one or more updated parameters;
writing one or more updated parameters relating to the component of the virtual machine using the read data and the data in the instruction;
wherein the method further comprises, in response to the activation of a trigger condition, writing the one or more updated parameters from the virtual machine to the physical memory of the computer-implemented machine.

2. The method of claim 1, wherein the launching of the virtual machine is initiated in response to the receipt of one or data packets containing data relating to the updated version of the computer program.

3. The method of claim 2, wherein the virtual machine is launched using the one or more data packets and one or more parameters relating to the one or more processing modules of the computer-implemented machine.

4. The method of any preceding claim, wherein the structure of the virtual machine is identical to the structure of the physical machine.

5. The method of any preceding claim, wherein the one or more initial parameters relating to the component are read from a hypervisor, optionally wherein the hypervisor is a type 1 hypervisor, further optionally wherein the trigger condition is activated when one or more initial parameters relating to a component cannot be read from the hypervisor.

6. The method of claim 5, wherein the one or more initial parameters cannot be read when the hypervisor is unable to emulate the component.

7. The method of claim 6, wherein the component of the physical machine that cannot be emulated by the hypervisor is a general processing unit, a network driver or a peripheral component interconnect.

8. The method of any preceding claim further comprising, for each of the plurality of instructions, storing a pointer on the virtual machine indicating the instruction that is being executed, optionally wherein the method further comprises, after writing one or more updated parameters relating to the component to the virtual machine, updating the pointer to indicate a subsequent instruction to be executed.

9. The method of any preceding claim wherein the method further comprises, in response to the trigger condition being activated, pausing loading of the updated version of the computer program onto the virtual machine.

10. The method of any preceding claim wherein the method further comprises, in response to the trigger condition being activated, pausing running the initial version of the computer program on the physical machine.

11. The method of any of claims 8 to 10 further comprising, in response to the trigger condition being activated, transmitting the pointer to the physical machine, optionally:
wherein the pointer is transmitted to the physical machine at the same time as the writing of the stored one or more updated parameters from the virtual machine to the physical memory of the computer-implemented machine; and/or
wherein the method further comprises, after the physical machine receives the pointer, loading the updated version of the computer program on the physical machine starting from the instruction indicated by the pointer.

12. The method of any preceding claim wherein the writing the stored one or more updated parameters from the virtual machine to the physical memory of the computer-implemented machine comprises taking a snapshot of the state of the virtual machine and writing the snapshot of the virtual machine to the memory of the physical machine.

13. The method of any preceding claim further comprising, if the updated version of the computer program fails to load onto the virtual machine, discarding the updated version of the computer program.

14. The method of any preceding claim, wherein the computer program is a kernel.

15. A computer-implemented machine configured to load an updated version of a computer program onto the machine whilst the machine is running an initial version of the computer program, the computer-implemented machine comprising:
a physical memory; and
one or more processing modules configured to:
launch a virtual machine on the computer-implemented machine;
load the updated version of the computer program onto the virtual machine, the loading comprising, for each of a plurality of instructions:
receiving an instruction to update a component of the physical machine;
reading one or more initial parameters relating to the component;
updating the one or more initial parameters using data contained within the instruction to generate one or more updated parameters;
writing one or more updated parameters relating to the component of the virtual machine using the read data and the data in the instruction; and
storing one or more updated parameters on the virtual machine; and
in response to the activation of a trigger condition, writing the one or more updated parameters from the virtual machine to the physical memory of the computer-implemented machine.
